# FASCICULE DE BREVET EUROPEEN

(11) **EP 3 394 795 B1**
(45) Date de publication et mention de la délivrance du brevet: **13.07.2022**
(21) Numéro de dépôt: 16819570.9
(22) Date de dépôt: 22.12.2016
(51) Int. Cl.: G06K 9/62

(54) **PROCÉDÉ DE DÉTECTION D'UN TIMON D'ATTELAGE ET PRODUIT PROGRAMME D'ORDINATEUR ASSOCIÉ**
VERFAHREN ZUR ERKENNUNG EINER DEICHSEL UND ZUGEHÖRIGES COMPUTERPROGRAMMPRODUKT
METHOD FOR DETECTING A TOWBAR AND ASSOCIATED COMPUTER PROGRAM PRODUCT

(30) Priorité: 23.12.2015 FR 1502686
(43) Date de publication de la demande: 31.10.2018
(73) Titulaire: Revenue Collection Systems France SAS, 91220 Plessis-Pâté (FR)
(72) Inventeur: MARCONI, Philippe, 91229 Bretigny-Sur-Orge Cedex (FR)
(74) Mandataire: Lavoix
(86) Numéro de dépôt international: PCT/EP2016/082474
(87) Numéro de publication internationale: WO 2017/109127

(56) Documents cités:
- FR-A1- 2 916 565
- JP-A- 2004 013 207
- JP-A- 2013 029 974
- JP-A- 2013 044 152
- OKABE H ET AL: "Compact vehicle sensor using a retroreflective optical scanner", INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9 novembre 1997 (1997-11-09), pages 201-205, XP010270871, DOI: 10.1109/ITSC.1997.660475 ISBN: 978-0-7803-4269-9

## Description

La présente invention concerne un procédé de détection d'un timon d'attelage. La présente invention concerne également un produit programme d'ordinateur et un support physique d'information associés.

Des systèmes automatiques de détection de véhicules sont fréquemment utilisés dans de nombreuses applications, en particulier le comptage de véhicules à des fins statistiques ou le contrôle d'accès à certaines zones. Par exemple, des barrières automatiques sont positionnées à la sortie de zones payantes de stationnement ou aux extrémités de sections autoroutières. Ces systèmes sont en particulier prévus pour autoriser ou non le passage de véhicules en fonction d'une identification ou du paiement d'une somme prédéfinie.

Afin d'améliorer le coût de fonctionnement de ces installations, de nombreux systèmes de détection sont entièrement automatisés, fonctionnant sans intervention humaine dans la majorité des situations. Cependant, il en résulte une perte de précision qui peut mener à des détections erronées. En particulier, il peut être difficile pour le système de faire la différence entre un véhicule tirant une remorque à l'aide d'un timon d'attelage et deux véhicules se suivant à faible distance l'un de l'autre.

Dans le cas où de tels systèmes de détection sont utilisés pour vérifier l'accès à des zones particulières, si un véhicule tractant une remorque est identifié à tort comme deux véhicules séparés, un signal de détection d'une fraude est susceptible d'être émis. Le traitement de ce signal erroné entraîne une surcharge de travail pour l'exploitant du système, ce qui résulte en des coûts supplémentaires. Dans le cas contraire, l'exploitant s'exposerait à une perte de revenus.

Des procédés de détection de timons d'attelages reliant deux véhicules existent, notamment décrits dans un article de Okabe H et al. intitulé « Compact vehicle sensor using a reflective optical scanner » (IEEE Intelligent Transportation System daté du 9 novembre 2017) ou les documents JP 2013 044152 A et JP 2004 013207 A, mais nécessitent un matériel complexe et onéreux.

Il existe donc un besoin pour un procédé de détection de timons d'attelages reliant deux véhicules, qui soit mis en oeuvre par une installation de détection de véhicule plus simple et moins onéreuse. Il existe également un besoin pour un procédé de détection de timons d'attelages reliant deux véhicules qui génère moins de fausses alertes.

A cet effet, il est proposé un procédé de détection d'un timon reliant deux véhicules automobiles se déplaçant entre une première zone et une deuxième zone, la première zone étant séparée de la deuxième zone par une zone de contrôle, le procédé étant mis en oeuvre par une installation comportant une unique caméra de contrôle configurée pour acquérir au moins une image de la zone de contrôle, le procédé comprenant des étapes d'acquisition, par la caméra de contrôle, d'une unique image de référence de la zone de contrôle, aucun véhicule n'étant présent dans la zone de contrôle au cours de l'étape d'acquisition. Le procédé comprend des étapes de déplacement d'un premier véhicule et d'un deuxième véhicule, à travers la zone de contrôle, depuis la première zone jusqu'à la deuxième zone, et de capture, par la caméra de contrôle, d'une image de travail bidimensionnelle de la zone de contrôle, l'étape de capture étant itérée périodiquement au cours de l'étape de déplacement. Le procédé comprend une étape de détermination de la présence éventuelle d'un timon reliant le premier véhicule au deuxième véhicule par mise en oeuvre d'au moins une technique choisie parmi une première technique comprenant les étapes de comparaison de chaque image de travail à l'image de référence, et de détermination de la présence éventuelle d'un timon lorsqu'aucune image de travail n'est identique à l'image de référence et une deuxième technique comprenant des étapes de reconnaissance d'une plaque d'immatriculation à l'avant du premier véhicule, de reconnaissance d'une plaque d'immatriculation à l'arrière du deuxième véhicule, de comparaison des deux plaques d'immatriculation reconnues et de détermination de la présence éventuelle d'un timon lorsque les deux plaques d'immatriculation ne sont pas identiques.

Selon un mode de réalisation particulier, le procédé comprend une ou plusieurs des caractéristiques suivantes, prises isolément ou selon toutes les combinaisons techniquement possibles :
- le procédé comprend, en outre, lorsque la présence éventuelle d'un timon reliant le premier véhicule au deuxième véhicule a été déterminée, une étape de reconnaissance d'un timon par utilisation d'une technique d'apprentissage.
- l'intervalle de temps entre la mise en oeuvre de l'étape de détermination et l'étape de reconnaissance d'un timon est supérieur ou égal à dix minutes.
- l'étape de capture est itérée périodiquement avec une fréquence inférieure ou égale à 30 ms.
- la caméra de contrôle comporte un axe optique et, au cours de l'étape de capture et de l'étape d'acquisition, une différence angulaire entre l'axe optique et une direction horizontale est inférieure ou égale à 10 degrés.
- au moins la première technique est mise en œuvre, un champ visuel étant défini pour la caméra de contrôle, le champ visuel comportant une première partie et une deuxième partie, la zone de contrôle étant comprise dans la première partie, l'image de référence et l'image de travail comprenant chacune une première portion et une deuxième portion, la première portion étant une image de la première partie et la deuxième portion étant une image de la deuxième partie du champ visuel, une surface de la première portion étant strictement inférieure à un cinquième d'une surface de la deuxième portion, l'étape de comparaison comprenant la comparaison uniquement de la première portion de l'image de référence à la première portion de l'image de travail et l'étape de détermination comprenant la détermination d'un timon lorsque la première portion de chaque image de travail est identique à la première portion de l'image de référence.
- au cours des étapes d'acquisition et de capture, une distance de mise au point est définie pour la caméra de contrôle, la distance de mise au point étant calculé par le capteur de type varifocale.
- au moins la première technique est mise en oeuvre et l'étape de comparaison comprend la soustraction de l'image de travail de l'image de référence.
- un champ visuel est défini pour la caméra de contrôle, chaque point de l'image de référence et de l'image de travail étant associé à un point du champ visuel, la caméra de contrôle comportant un ensemble d'éléments détecteurs configurés chacun pour détecter un premier rayonnement électromagnétique, la caméra de contrôle étant configurée pour émettre avec une fréquence prédéfinie un deuxième rayonnement électromagnétique, pour mesurer une durée entre l'émission du deuxième rayonnement et la réception du premier rayonnement par chaque élément détecteur et pour générer, à partir des durées mesurées, une cartographie associant une distance entre la caméra de contrôle et chaque point du champ visuel à chaque point correspondant de l'image de référence et de l'image de travail.

Il est également proposé un produit programme d'ordinateur comportant des instructions logicielles qui, lorsqu'elles sont exécutées par un calculateur, mettent en oeuvre un procédé tel que précédemment décrit.

L'invention propose également un support physique d'information sur lequel est mémorisé le programme d'ordinateur précédent. L'invention est définie par les revendications indépendantes, des aspects supplémentaires de l'invention sont décrits dans les revendications dépendantes.

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique partielle en élévation d'une partie d'une installation de contrôle d'une barrière automatique comprenant une caméra de contrôle,
- la figure 2 est un chronogramme des étapes d'un procédé de détection d'un timon d'attelage reliant deux véhicules, mis en oeuvre par l'installation de la figure 1, et
- la figure 3 est une image de travail acquise par la caméra de contrôle de la figure 1.

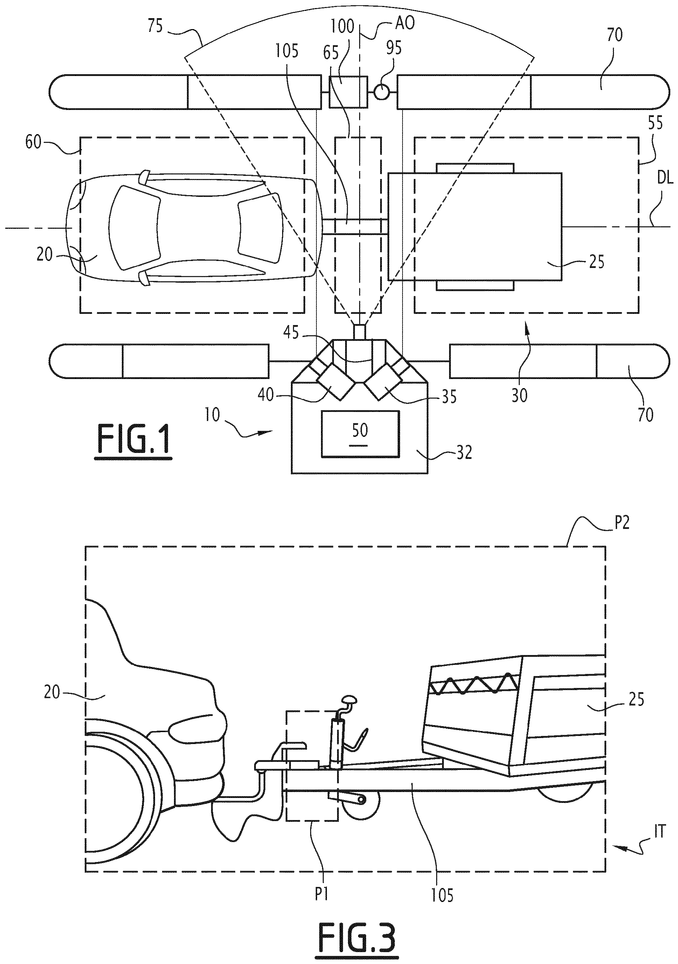

Une installation 10 de contrôle d'une barrière automatique 15, un premier véhicule automobile 20 et un deuxième automobile 25 ont été représentés sur la figure 1.

L'installation 10 qui est configurée pour identifier au moins un véhicule 20, 25 se déplaçant sur une chaussée 30 et pour commander un mouvement de la barrière 15 entre une position ouverte et une position fermée en fonction du résultat de l'identification.

L'installation 10 comporte un pilier 32, une première caméra 35, une deuxième caméra 40, une caméra de contrôle 45 et un calculateur 50.

La chaussée 30 comporte une première zone 55, une deuxième zone 60, et une zone de contrôle 65.

La chaussée 30 s'étend selon une direction longitudinale DL. La chaussée 30 est, par exemple, délimitée dans une direction horizontale perpendiculaire à la direction longitudinale DL par deux îlots 70.

Un sens de circulation est défini pour la chaussée 30. Le sens de circulation est le sens dans lequel la circulation des véhicules 20, 25 est autorisée sur la chaussée 30. Le sens de circulation définit, pour la chaussée 30, un amont et un aval.

La première zone 55 et la deuxième zone 60 sont séparées l'une de l'autre par la barrière 15 lorsque la barrière 15 est en position fermée. Selon le sens de circulation, la première zone 55 est située avant la barrière 15 et la deuxième zone 60 est située après la barrière 15.

Par exemple, la première zone 55 est la zone de la chaussée 30 qui est située en amont de la zone de contrôle 65 tout en étant délimitée, dans une direction horizontale perpendiculaire à la direction longitudinale DL, par les deux îlots 70. La deuxième zone 55 est la zone de la chaussée 30 qui est située en aval de la zone de contrôle 65 tout en étant délimitée, dans une direction horizontale perpendiculaire à la direction longitudinale DL, par les deux îlots 70.

La zone de contrôle 65 sépare la première zone 55 de la deuxième zone 60. En particulier, lorsqu'un véhicule 20, 25 se déplace depuis la première zone 55 jusqu'à la deuxième zone 60, le véhicule 20, 25 traverse la zone de contrôle 65.

Par exemple, la zone de contrôle 65 est délimitée, dans une direction horizontale perpendiculaire à la direction longitudinale DL, par le pilier 32 et la barrière 15. La zone de contrôle 65 est délimitée, selon la direction longitudinale DL, par la première zone 55 et par la deuxième zone 60.

Le pilier 32 est prévu pour former un support à la première caméra 35, à la deuxième caméra 40 et à la caméra de contrôle 45. Le pilier 32 est, en outre, prévu pour isoler le calculateur 50 de l'extérieur du piler 32.

La première caméra 35 est propre à acquérir une première image de la première zone 55.

La première caméra 35 est, par exemple, une caméra CCD. Les caméras CCD (de l'anglais « Charge-Coupled Device » signifiant « dispositif de couplage de charge ») sont des caméras connues pour leur robustesse.

En variante, la première caméra 35 est une caméra CMOS. Les caméras CMOS (de l'anglais « Complementary Metal-Oxide-Semiconductor ») sont des caméras utilisant des technologies classiques de la microélectronique.

La deuxième caméra 40 est propre à acquérir une deuxième image de la deuxième zone 60. La deuxième caméra 40 est, par exemple, une caméra CCD. En variante, la deuxième caméra 40 est une caméra CMOS.

Selon l'exemple de la figure 1, chacune de la première caméra 35 et de la deuxième caméra 40 est orientée, dans un plan horizontal, avec un angle de 30 degrés (°) par rapport à la chaussée 30. La première caméra 35 et la deuxième caméra 40 sont, chacune, disposées en regard de la barrière 15.

La caméra de contrôle 45 est propre à acquérir une image de la zone de contrôle 65.

La caméra de contrôle 45 comporte un axe optique AO.

L'axe optique AO a été représenté sur la figure 1 par un trait discontinu.

Selon l'exemple de la figure 1, l'axe optique AO est perpendiculaire à la direction longitudinale DL.

L'axe optique AO est sensiblement horizontal. Il est entendu par « sensiblement horizontal » qu'une différence angulaire entre l'axe optique AO et une direction horizontale est inférieure ou égale à 10 degrés. En particulier, une différence angulaire entre l'axe optique AO et une direction horizontale perpendiculaire à la direction longitudinale DL est inférieure ou égale à 10 degrés.

Un champ visuel 75 est défini pour la caméra de contrôle 45. Le champ visuel est défini comme étant l'ensemble de l'espace dont la caméra de contrôle 45 est propre à acquérir une image.

Le champ visuel 75 présente une ouverture angulaire. L'ouverture angulaire est, par exemple, égale à 90°.

Le champ visuel 75 comporte une première partie 80 et une deuxième partie 90.

Une distance de mise au point est définie pour la caméra de contrôle 45. La distance de mise au point est la distance entre la caméra de contrôle 45 et un point du champ visuel 75 dont l'image est formée dans le plan focal image de la caméra de contrôle 45. En d'autres termes, la distance de mise au point est la distance entre la caméra de contrôle 45 et un point du champ visuel apparaissant net sur une image acquise par la caméra de contrôle 45.

La caméra de contrôle 45 est configurée pour acquérir une image dans la gamme proche infrarouge ou dans la gamme visible.

La gamme visible est la gamme de longueurs d'ondes électromagnétiques qui est comprise entre 400 nanomètres et 800 nanomètres.

La gamme proche infrarouge est la gamme de longueurs d'ondes électromagnétiques comprise entre 800 nanomètres et 3 microns.

La caméra de contrôle 45 est unique. En particulier, la caméra de contrôle 45 est unique en ce que, parmi les caméras 35, 40, 45 de l'installation 10, seule la caméra de contrôle 45 est configurée pour acquérir une image de la zone de contrôle 65.

La caméra de contrôle 45 est fixe. En particulier, l'axe optique AO ne varie pas en fonction du temps.

Une distance, mesurée selon une direction verticale, entre la caméra de contrôle 45 et la chaussée 30 est comprise entre 35 cm et 120 cm.

La caméra de contrôle 45 est, par exemple, une caméra CCD. En variante, la caméra de contrôle 45 est une caméra CMOS.

Selon une autre variante, la caméra de contrôle 45 est une caméra de type « temps de vol ».

Une caméra temps de vol est une caméra propre à générer une cartographie tridimensionnelle des objets dans son champ de vision.

Lorsque la caméra de contrôle 45 est une caméra temps de vol, la caméra de contrôle 45 comporte un ensemble d'éléments détecteurs et une source de rayonnement électromagnétique. Chaque élément détecteur est configuré pour détecter un premier rayonnement électromagnétique et pour générer en réponse un signal électrique. Chaque élément détecteur est, par exemple, un élément détecteur CMOS.

La source est configurée pour émettre avec une fréquence temporelle prédéfinie un deuxième rayonnement électromagnétique. Le deuxième rayonnement électromagnétique est, par exemple, un rayonnement proche infrarouge.

La caméra de contrôle 45 est alors configurée pour mesurer une durée entre une émission du deuxième rayonnement électromagnétique et la réception du premier rayonnement électromagnétique par chaque élément détecteur. La caméra de contrôle 45 est, en outre, propre à calculer, pour chaque point du champ visuel 75, une distance entre ledit point et la caméra de contrôle 45 à partir des durées mesurées.

L'image acquise par la caméra de contrôle 45 est alors une cartographie des distances calculées.

La première partie 80 comprend la zone de contrôle 65.

La deuxième partie 90 est complémentaire de la première partie 80, c'est-à-dire que le champ visuel 75 est formé par la réunion de la première partie 80 et de la deuxième partie 90, aucun point du champ visuel 75 n'appartenant à la fois à la première partie 80 et à la deuxième partie 90.

Le calculateur 50 comprend un processeur et une mémoire.

Un produit programme d'ordinateur comportant des instructions logicielles est mémorisé dans la mémoire. Le programme d'ordinateur est chargeable sur le processeur et est adapté pour entraîner la mise en œuvre d'un procédé de détection d'un timon d'attelage lorsque le programme d'ordinateur est mis en oeuvre sur le processeur.

Une liste d'identifiants Li est mémorisée dans la mémoire. La liste d'identifiants comprend un ensemble d'identifiants d'immatriculation de véhicules autorisés à franchir la barrière 95.

La barrière 15 comporte une barre 95 et un mécanisme 100.

La barre 95 est mobile entre une position ouverte et une position fermée. Lorsque la barre 95 est dans la position ouverte, la barrière 15 permet le déplacement de véhicules 20, 25 entre la première zone 55 et la deuxième zone 60. Lorsque la barre 95 est dans la position fermée, la barrière 15 empêche le déplacement de véhicules 20, 25 entre la première zone 55 et la deuxième zone 60. La barre 95 est, par exemple, mobile en rotation entre la position ouverte et la position fermée.

Le mécanisme 100 est configuré pour déplacer la barre 95 entre la position ouverte et la position fermée.

Le premier véhicule 20 est un véhicule automobile autonome, c'est-à-dire un véhicule automobile comportant un moteur propre à entraîner un déplacement du premier véhicule 20. Par exemple, le premier véhicule 20 est une voiture individuelle.

Le premier véhicule 20 comporte une première plaque d'immatriculation et une deuxième plaque d'immatriculation.

La première plaque d'immatriculation est une plaque avant du premier véhicule 20. Par exemple, la première plaque d'immatriculation est fixée à un pare-chocs avant du premier véhicule 20.

La deuxième plaque d'immatriculation est une plaque arrière du premier véhicule 20. Par exemple, la deuxième plaque d'immatriculation est fixée à un pare-chocs arrière du premier véhicule 20.

Un premier identifiant d'immatriculation i1 est porté par chacune de la première plaque et de la deuxième plaque. Le premier identifiant d'immatriculation i1 est commun à la première plaque et à la deuxième plaque.

Un identifiant d'immatriculation est un ensemble de caractères propre à identifier un véhicule 20, 25 de manière unique. En particulier, un identifiant d'immatriculation est un ensemble de caractères associé à un unique véhicule 20, 25. Un identifiant d'immatriculation est, par exemple, une suite de lettres et de chiffres.

Le deuxième véhicule 25 est un véhicule tracté, c'est-à-dire que le deuxième véhicule 25 est configuré pour être fixé au premier véhicule 20 et déplacé par le premier véhicule 20. En particulier, le deuxième véhicule 25 est configuré pour être fixé à l'arrière du premier véhicule 20 à l'aide d'un timon d'attelage 105.

En variante, le deuxième véhicule 25 est un véhicule automobile autonome. Dans ce cas, le deuxième véhicule 25 n'est pas fixé au premier véhicule 20 par un timon d'attelage 105. En particulier, le deuxième véhicule 25 est alors dépourvu de timon d'attelage 105.

Le deuxième véhicule comporte une troisième plaque d'immatriculation et une quatrième plaque d'immatriculation.

La troisième plaque d'immatriculation est une plaque avant du deuxième véhicule 25. Par exemple, la troisième plaque d'immatriculation est fixée à un pare-chocs avant du deuxième véhicule 25.

La quatrième plaque d'immatriculation est une plaque arrière du deuxième véhicule 25. Par exemple, la quatrième plaque d'immatriculation est fixée à un pare-chocs arrière du deuxième véhicule 25.

Un deuxième identifiant d'immatriculation i2 est porté par chacune de la troisième plaque et de la quatrième plaque. Le deuxième identifiant d'immatriculation i2 est commun à la troisième plaque et à la quatrième plaque.

En France, lorsque le deuxième véhicule 25 est un véhicule tracté, le premier identifiant d'immatriculation i1 et le deuxième identifiant d'immatriculation i2 sont identiques l'un à l'autre si le PTAC (acronyme de « poids total autorisé en charge ») est inférieur à 500 kg, sinon la remorque a sa propre immatriculation, donc différente.

Lorsque le deuxième véhicule 25 est un véhicule autonome, l'identifiant d'immatriculation i1 et le deuxième identifiant d'immatriculation i2 sont différents l'un de l'autre.

Le fonctionnement de l'installation 10 va maintenant être décrit.

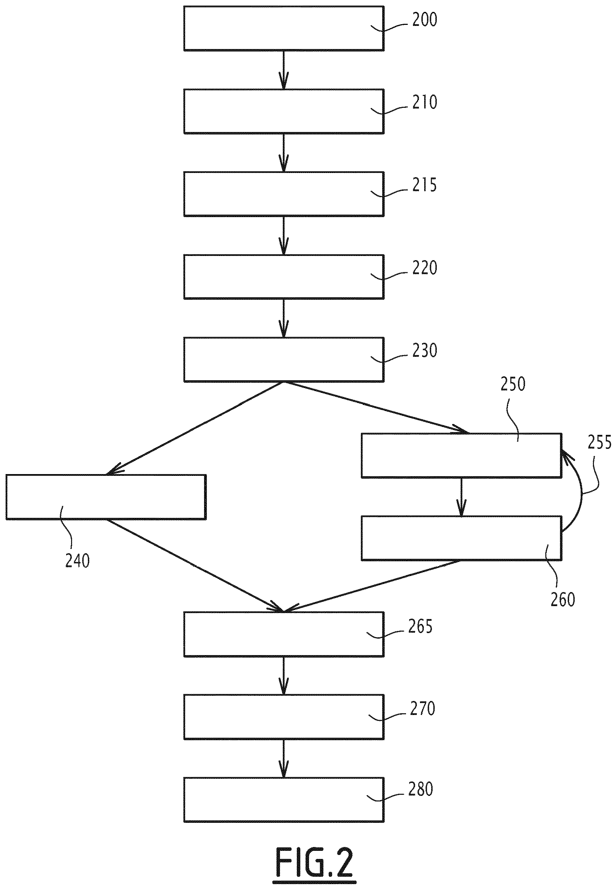

Un ordinogramme d'un procédé de détection d'un timon d'attelage 105, mis en œuvre par l'installation 10, est représenté sur la figure 2.

Le procédé de détection d'un timon d'attelage 105 comporte une étape initiale 200, une étape 210 d'entrée, une première étape 215 de reconnaissance, une étape 220 d'acquisition, une étape 230 de commande, une étape 240 de déplacement, une étape 250 de capture, une étape 260 de comparaison, une deuxième étape 265 de reconnaissance, une étape 270 de détermination et une étape 280 d'alerte.

Au cours de l'étape initiale 200, la barre 95 est en position fermée. Aucun véhicule 20, 25 n'est présent dans la première zone 55 ni dans la zone de contrôle 65.

Un compteur C est mémorisé dans la mémoire du calculateur 50. Le compteur C est fixé égal à zéro au cours de l'étape initiale 200.

Au cours de l'étape 210 d'entrée, le premier véhicule 20 pénètre dans la première zone 55. En particulier, au moins la première plaque d'immatriculation est comprise dans la première zone 55.

Au cours de l'étape d'entrée 210, la première caméra 35 acquiert au moins une première image de la première zone 55. La première image comporte au moins une image de la première plaque d'immatriculation.

Par exemple, la première caméra 35 acquiert avec une première fréquence temporelle prédéfinie une pluralité de premières images, et le calculateur 50 détecte l'entrée du premier véhicule dans la première zone 55 à partir des premières images selon un algorithme de reconnaissance de mouvements.

Au cours de la première étape de reconnaissance 215, le premier identifiant i1 porté par la première plaque est reconnu par le calculateur 50.

Par exemple, le calculateur 50 met en oeuvre une méthode numérique de reconnaissance optique de caractères (également appelée OCR, de l'Anglais « Optical Character Récognition). Les méthodes OCR sont un ensemble de méthodes permettant d'identifier des caractères dans une image ou un texte manuscrit.

Le premier identifiant d'immatriculation i1 reconnu est mémorisé dans la mémoire du calculateur 50.

Le calculateur 50 compare, en outre, le premier identifiant i1 à chaque identifiant de la liste d'identifiants Li.

La mise en oeuvre de l'étape 220 d'acquisition est déclenchée par la détection, par le calculateur 50, de l'entrée du premier véhicule 20 dans la première zone 55. Ainsi, lorsque l'étape d'acquisition 220 est mise en oeuvre, aucun véhicule 20, 25 n'est présent dans la zone de contrôle 65, c'est-à-dire qu'aucune partie d'un véhicule 20, 25 n'est comprise dans la zone de contrôle 65.

Au cours de l'étape 220 d'acquisition, la caméra de contrôle 45 acquiert une unique image de référence IR. L'image de référence IR est unique en ce qu'une seule image de référence IR est acquise au cours de la mise en oeuvre du procédé de détection.

L'image de référence IR est une image du champ visuel 75. Chaque point de l'image de référence IR est associée à un unique point du champ visuel 75.

L'image de référence IR est une image bidimensionnelle. Une image bidimensionnelle est une image propre à être représentée sur un plan sans perte d'information. Par exemple, une image en niveaux de gris est une image bidimensionnelle. Une cartographie représentant une distance entre chaque point d'un champ visuel et une caméra est un autre exemple d'image bidimensionnelle si elle ne contient pas d'autre informations.

L'image de référence IR comprend une première portion P1 et une deuxième portion P2.

La première portion P1 est une image de la première partie du champ visuel 75. La première portion P1 comprend donc une image de la zone de contrôle 65.

La première portion P1 présente une première surface. La première surface comporte par exemple 7000 pixels. Un pixel, de l'Anglais « Picture Elements » qui signifie élément d'image, est l'unité de base permettant de mesurer la définition d'une image numérique matricielle.

La deuxième portion P2 est une image de la deuxième partie du champ visuel 75. L'image de référence IR est donc formée par la réunion de sa première partie et de sa deuxième partie.

La deuxième portion P2 présente une deuxième surface.

La deuxième surface est strictement supérieure à la première surface. Par exemple, la première surface est strictement inférieure à un cinquième de la deuxième surface.

L'image de référence IR est mémorisée dans la mémoire du calculateur 50.

Au cours de l'étape d'acquisition 220, la distance de mise au point DM est adaptée automatiquement par utilisation d'une optique de type varifocale. Une optique de type varifocale est plus adaptée que l'objectif à focal unique et permet de s'adapter rapidement au changement d'environnement (éclairage, distance). La focale est de type longue et adaptée aux infrarouges. Les angles mesurés sont 35°14', 20°37' et 5°24'. La vitesse d'obturation est réglée au 1/2500 avec rectification de l'indice de lumination par le capteur (EV). Cet indice varie de -27 pour une scène de nuit noir avec une focale de 20 mm à +3 pour une scène de plein soleil avec une focale de 5 mm. Cette vitesse permet une prise de vue nette de la scène à analyser.

Lorsque le premier identifiant i1 est identique à un identifiant de la liste d'identifiants Li, le calculateur 50 commande l'ouverture de la barrière 15 au cours de l'étape 230 de commande.

Au cours de l'étape de déplacement 240, le premier véhicule 20 et le deuxième véhicule 25 se déplacent depuis la première zone 55 jusqu'à la deuxième zone 60. Le premier véhicule 20 et le deuxième véhicule 25 traversent chacun la zone de contrôle 65 pour atteindre la deuxième zone 60. De préférence, lorsque l'étape de déplacement 240 est achevée, le deuxième véhicule 25 est sorti de la deuxième zone 60.

Au cours de l'étape de déplacement 240, le premier véhicule 20 est à chaque instant en aval du deuxième véhicule 25. En d'autres termes, le deuxième véhicule 25 suit le premier véhicule 20.

Au cours de l'étape de capture 250, une image de travail IT est capturée par la caméra de contrôle 45.

Un exemple d'image de référence IT a été représenté sur la figure 3.

L'image de travail IT est une image bidimensionnelle.

L'image de travail IT est une image du champ visuel 75. Chaque point de l'image de travail IT est associé à un unique point du champ visuel 75.

L'image de travail IT comprend une première portion P1 et une deuxième portion P2.

La première portion P1 est une image de la première partie du champ visuel 75. La première portion P1 comprend donc une image de la zone de contrôle 65.

La première portion P1 présente la première surface. La deuxième portion P2 est une image de la deuxième partie du champ visuel 75. L'image de référence IR est donc formée par la réunion de sa première partie et de sa deuxième partie.

La deuxième portion P2 présente la deuxième surface.

L'image de travail IT est mémorisée dans la mémoire du calculateur 50.

Au cours de l'étape de comparaison 260, l'image de travail IT est comparée à l'image de référence IR.

Par exemple, l'image de travail IT est soustraite de l'image de référence IR, ou vice-versa. La soustraction d'image est une méthode numérique dans laquelle une valeur numérique de chaque pixel d'une image est soustraite à une valeur numérique du pixel correspondant d'une autre image.

Lorsque l'image de travail IT est identique à l'image de référence IR, le compteur C est incrémenté d'une unité.

De préférence, au cours de l'étape de comparaison 260, seule la première portion P1 de l'image de travail IT est comparée à la première portion P1 de l'image de référence IR. Les deuxièmes portions P2 respectives ne sont pas comparées l'une à l'autre.

Les étapes de capture 250 et de comparaison 260 sont itérées périodiquement dans cet ordre une pluralité de fois au cours de l'étape de déplacement 240. Ainsi, chaque étape de comparaison 260 est mise en œuvre une seule fois entre deux étapes de capture 250.

Par exemple, la mise en oeuvre de la première étape de capture 250 est déclenchée par la mise en oeuvre de l'étape 215 d'entrée 210 et les étapes de capture 250 et de comparaison 260 sont itérées périodiquement dans cet ordre jusqu'à ce que la deuxième étape 265 de reconnaissance soit mise en oeuvre.

L'itération est représentée par une flèche 255 sur la figure 2.

De préférence, les étapes de capture 250 et de comparaison 260 sont chacune itérées périodiquement avec une fréquence temporelle inférieure ou égale à 30 ms.

Lorsque l'étape de déplacement 240 est achevée, la deuxième étape de reconnaissance 265 est mise en oeuvre.

Au cours de la deuxième étape de reconnaissance 265, la deuxième caméra 40 acquiert au moins une deuxième image de la deuxième zone 60. La deuxième image comporte au moins une image de la quatrième plaque d'immatriculation.

Par exemple, la deuxième caméra 40 acquiert avec une fréquence temporelle prédéfinie une pluralité de deuxièmes images, et le calculateur 50 détecte la sortie du deuxième véhicule de la deuxième zone 60 à partir des deuxièmes images selon un algorithme de reconnaissance de mouvements.

Au cours de la deuxième étape de reconnaissance 265, le deuxième identifiant i2 porté par la quatrième plaque est reconnu par le calculateur 50.

Le deuxième identifiant i2 est mémorisé dans la mémoire du calculateur 50.

Au cours d'une étape 270 de détermination, le calculateur 50 détermine la présence éventuelle d'un timon 105 reliant le premier véhicule 20 au deuxième véhicule 25 si aucune des images de travail IT n'est identique à l'image de référence IR. Par exemple, le calculateur 50 détermine la présence éventuelle d'un timon 105 reliant le premier véhicule 20 au deuxième véhicule 25 si le compteur C est égal à zéro après la fin de la deuxième étape de comparaison 265.

Au cours de l'étape de détermination 270, le premier identifiant i1 mémorisé est comparé au deuxième identifiant i2 mémorisé.

Au cours de l'étape 280 d'alerte, si la présence éventuelle d'aucun timon n'a été déterminée, un message d'alerte est généré par le calculateur 50 et mémorisé dans la mémoire à fin d'analyse ou transmis à un opérateur extérieur. Le message d'alerte comprend, par exemple, les première et deuxième images, ainsi qu'au moins une parmi la ou les images de travail IT qui sont identiques à l'image de référence IR.

Le message d'alerte est également émis si le premier identifiant i1 mémorisé n'est pas identique au deuxième identifiant i2 mémorisé.

Le procédé de détection est alors propre à être mis en oeuvre par une installation 10 plus simple que les installations de l'état de la technique. En particulier, le procédé est adapté à des installations 10 dont la caméra de contrôle 45 est une caméra d'un type courant et peu onéreux.

De plus, comme seules les premières portions P1 sont comparées les unes aux autres, le procédé de détection est moins gourmand en capacité de calcul que les procédés de détection de l'état de la technique.

En outre, le choix d'une distance de mise au point faible permet d'obtenir pour les images de référence IR et de travail IT un fond flou plus aisé à traiter. Le procédé est ainsi peu sensible à des mouvements à l'arrière-plan du champ visuel 75. Ainsi, la caméra de contrôle 45 est susceptible d'être positionnée avec son axe optique AO sensiblement horizontal à une hauteur équivalente à la hauteur d'un timon 105 par rapport au sol. La surface des premières portions P1 est donc, là encore, réduite, et le procédé rendu moins gourmand en termes de puissance de calcul.

La comparaison des images de travail IT aux à l'image de référence IR permet, en outre, de déterminer de manière très fiable la présence des timons 105. Le procédé est donc plus fiable que les procédés de l'état de la technique, et génère moins de fausses alertes.

Dans un tel mode de réalisation, il est ainsi déduit la présence du timon 205 à partir d'une absence de détection de discontinuité entre les deux véhicules 20 et 25.

Autrement formulé, il y a une très forte présomption de présence d'un objet entre les deux véhicules 20 et 25 mais cet objet n'a pas été reconnu.

De manière alternative, la présence du timon 205 peut être déterminée par utilisation d'une technique comprenant des étapes de reconnaissance d'une plaque d'immatriculation à l'avant du premier véhicule 20, de reconnaissance d'une plaque d'immatriculation à l'arrière du deuxième véhicule 25, de comparaison des deux plaques d'immatriculation reconnues et de détermination de la présence éventuelle d'un timon 105 lorsque les deux plaques d'immatriculation ne sont pas identiques.

De manière plus générale, la détermination de la présence éventuelle d'un timon 105 reliant le premier véhicule 20 au deuxième véhicule 25 par mise en oeuvre d'au moins une technique choisie parmi une première technique et une deuxième technique.

La première technique comprend les étapes de comparaison de chaque image de travail IT à l'image de référence IR, et de détermination de la présence éventuelle d'un timon 105 lorsqu'aucune image de travail IT n'est identique à l'image de référence IR.

La deuxième technique comprend des étapes de reconnaissance d'une plaque d'immatriculation à l'avant du premier véhicule 20, de reconnaissance d'une plaque d'immatriculation à l'arrière du deuxième véhicule 25, de comparaison des deux plaques d'immatriculation reconnues et de détermination de la présence éventuelle d'un timon 105 lorsque les deux plaques d'immatriculation ne sont pas identiques.

Un exemple de mise en oeuvre des deux techniques est illustré par le mode de réalisation de la figure 2.

Selon un autre mode de réalisation, le procédé de détection comporte, lorsque la présence éventuelle d'un timon 105 reliant le premier véhicule 20 au deuxième véhicule 25 a été déterminée, une étape de reconnaissance d'un timon 105 par utilisation d'une technique d'apprentissage.

Cela permet de détecter avec assurance la présence d'un timon 105.

Selon un exemple, la technique d'apprentissage comporte une reconnaissance d'objet basée sur une ou série d'images issues de la détection de rupture ou continuité de la zone de contrôle 65.

Selon un mode de réalisation, de tels images sont obtenus après un traitement. Le traitement consiste, par exemple, à effectuer passage en niveaux de gris suivant un filtre alpha déterminé.

La technique d'apprentissage comporte ensuite une comparaison à une base d'apprentissage contenant les références de barres d'attelages.

La technique d'apprentissage établit alors une correspondance entre l'image de référence et le cas à traiter.

Un critère utilisé est, par exemple, le nombre de points identiques entre les deux images ou ayant des valeurs identiques à un intervalle de tolérance près.

Une telle correspondance utilisant le critère précédent peut être mise en oeuvre par détection de points dans l'image objet de référence, calcul d'un descripteur pour chaque point de l'image du cas à traiter, détection de concordance entre les descripteurs et les points de l'image de l'image de référence avec une pondération de distance, sélection des concordances significatives, calcul de transformation de perspective entre les deux objets et détermination du pourcentage de correspondance entre les deux objets à comparer basé sur le nombre de points concordants.

Par exemple, il est estimé que 85% de points concordant donne la certitude que l'objet de la scène est le même ou du même type que l'objet de référence.

Lors de l'étape de transformation de perspective, plusieurs possibilités sont envisageables, en combinaison ou non : modifier l'angle de vue, modifier le flou ou utiliser un filtre alpha.

De préférence, l'intervalle de temps entre la mise en oeuvre de l'étape de détermination et l'étape de reconnaissance d'un timon 105 est supérieur ou égal à dix minutes.

Une telle mise en oeuvre différée permet d'éviter de ralentir la mise en oeuvre du procédé de détermination. Autrement formulé, le traitement complexe est repoussé a posteriori.

Les modes de réalisation présentés précédemment sont combinables pour former d'autres modes de réalisation. Notamment, l'étape de reconnaissance peut être mise en œuvre lorsque la deuxième technique de reconnaissance de plaques conduit à la conclusion que les deux véhicules 20 et 25 ont deux plaques différentes.

## Revendications

1. Procédé de détection d'un timon (105) reliant deux véhicules automobiles (20, 25) se déplaçant entre une première zone (55) et une deuxième zone (60), la première zone (55) étant séparée de la deuxième zone (60) par une zone de contrôle (65), le procédé étant mis en oeuvre par une installation (10) comportant une unique caméra de contrôle (45) configurée pour acquérir au moins une image de la zone de contrôle (65), une première caméra (35) configurée pour acquérir au moins une image de la première zone (55) et une deuxième caméra (40) configurée pour acquérir au moins une image de la deuxième zone (60), le procédé comprenant des étapes de :
- entrée (210) durant laquelle la première caméra (35) acquiert au moins une première image de la première zone (55),
- acquisition (220), par la caméra de contrôle (45), d'une unique image de référence (IR) de la zone de contrôle (65), aucun véhicule (20, 25) n'étant présent dans la zone de contrôle (65) au cours de l'étape d'acquisition,
- capture (250), par la caméra de contrôle (45), d'une image de travail (IT) bidimensionnelle de la zone de contrôle (65), l'étape de capture étant itérée périodiquement au cours du déplacement d'un premier véhicule (20) et d'un deuxième véhicule (25), à travers la zone de contrôle (65), depuis la première zone (55) jusqu'à la deuxième zone (60), une première plaque d'immatriculation étant une plaque à l'avant du premier véhicule (20) et une deuxième plaque d'immatriculation étant une plaque à l'arrière du deuxième véhicule (25),
- reconnaissance (265) durant laquelle la deuxième caméra (40) acquiert au moins une deuxième image de la deuxième zone (60), et
- détermination (270) de la présence éventuelle d'un timon (105) reliant le premier véhicule (20) au deuxième véhicule (25) par mise en oeuvre d'au moins une technique choisie parmi :
- une première technique comprenant les étapes de comparaison de chaque image de travail (IT) à l'image de référence (IR), et de détermination de la présence éventuelle d'un timon (105) lorsqu'aucune image de travail (IT) n'est identique à l'image de référence (IR), et
- une deuxième technique comprenant des étapes de reconnaissance de la première plaque en utilisant première image, de reconnaissance de la deuxième plaque en utilisant la deuxième image, de comparaison des deux plaques d'immatriculation reconnues et de détermination de la présence éventuelle d'un timon (105) lorsque les deux plaques d'immatriculation ne sont pas identiques.

2. Procédé selon la revendication 1, dans lequel le procédé comprend, en outre, lorsque la présence éventuelle d'un timon (105) reliant le premier véhicule (20) au deuxième véhicule (25) a été déterminée, une étape de reconnaissance d'un timon (105) par utilisation d'une technique d'apprentissage.

3. Procédé selon la revendication 2, dans lequel l'intervalle de temps entre la mise en oeuvre de l'étape de détermination et l'étape de reconnaissance d'un timon (105) est supérieur ou égal à dix minutes.

4. Procédé selon la revendication 1, dans lequel l'étape de capture est itérée périodiquement avec une fréquence inférieure ou égale à 30 ms.

5. Procédé selon l'une quelconque des revendications 1 à 4, dans lequel la caméra de contrôle (45) comporte un axe optique (AO) et, au cours de l'étape de capture et de l'étape d'acquisition, une différence angulaire entre l'axe optique (OA) et une direction horizontale est inférieure ou égale à 10 degrés.

6. Procédé selon la revendication 5, dans lequel au moins la première technique est mise en oeuvre, un champ visuel (75) étant défini pour la caméra de contrôle (45), le champ visuel (75) comportant une première partie et une deuxième partie, la zone de contrôle (65) étant comprise dans la première partie, l'image de référence (IR) et l'image de travail (IT) comprenant chacune une première portion (P1) et une deuxième portion (P2), la première portion (P1) étant une image de la première partie et la deuxième portion (P2) étant une image de la deuxième partie du champ visuel (75), une surface de la première portion (P1) étant strictement inférieure à un cinquième d'une surface de la deuxième portion (P2), l'étape de comparaison comprenant la comparaison uniquement de la première portion (P1) de l'image de référence (IR) à la première portion (P1) de l'image de travail (IT) et l'étape de détermination comprenant la détermination d'un timon (105) lorsque la première portion (P1) de chaque image de travail (IT) est identique à la première portion (P1) de l'image de référence (IR).

7. Procédé selon la revendication 6, dans lequel, au cours des étapes d'acquisition et de capture, une distance de mise au point est définie pour la caméra de contrôle (45), la distance de mise au point étant calculé par le capteur de type varifocale.

8. Procédé selon l'une quelconque des revendications 1 à 7, dans lequel au moins la première technique est mise en oeuvre et l'étape de comparaison comprend la soustraction de l'image de travail (IT) de l'image de référence (IR).

9. Procédé selon l'une quelconque des revendications 1 à 7, dans lequel un champ visuel (75) est défini pour la caméra de contrôle (45), chaque point de l'image de référence (IR) et de l'image de travail (IT) étant associé à un point du champ visuel (75), la caméra de contrôle (45) comportant un ensemble d'éléments détecteurs configurés chacun pour détecter un premier rayonnement électromagnétique, la caméra de contrôle (45) étant configurée pour émettre avec une fréquence prédéfinie un deuxième rayonnement électromagnétique, pour mesurer une durée entre l'émission du deuxième rayonnement et la réception du premier rayonnement par chaque élément détecteur et pour générer, à partir des durées mesurées, une cartographie associant une distance entre la caméra de contrôle (45) et chaque point du champ visuel (75) à chaque point correspondant de l'image de référence (IR) et de l'image de travail (IT).

10. Produit programme d'ordinateur comportant des instructions logicielles qui, lorsqu'elles sont exécutées par un calculateur, mettent en oeuvre un procédé selon l'une quelconque des revendications 1 à 9.

11. Support physique d'information sur lequel est mémorisé un produit programme d'ordinateur comportant des instructions logicielles qui, lorsqu'elles sont exécutées par un calculateur, mettent en oeuvre un procédé selon l'une quelconque des revendications 1 à 9.

## Patentansprüche

1. Verfahren zum Erfassen einer Deichsel (105), die zwei Kraftfahrzeuge (20, 25) verbindet, die sich zwischen einer ersten Zone (55) und einer zweiten Zone (60) bewegen, wobei die erste Zone (55) durch eine Kontrollzone (65) von der zweiten Zone (60) getrennt ist, wobei das Verfahren von einer Anlage (10) implementiert wird, umfassend eine einzelne Kontrollkamera (45), die konfiguriert ist, um mindestens ein Bild des Kontrollbereichs (65) zu erfassen, eine erste Kamera (35), die konfiguriert ist, um mindestens ein Bild des ersten Bereichs (55) zu erfassen, und eine zweite Kamera (40), die konfiguriert ist, um mindestens ein Bild des zweiten Bereichs (60) zu erfassen, das Verfahren umfassend die folgenden Schritte:
- Eingang (210), während dessen die erste Kamera (35) mindestens ein erstes Bild des ersten Bereichs (55) aufnimmt,
- Aufnehmen (220), durch die Kontrollkamera (45), eines einzelnen Referenzbilds (IR) des Kontrollbereichs (65), wobei sich während des Aufnahmeschritts kein Fahrzeug (20, 25) in dem Kontrollbereich (65) befindet,
- Erfassen (250), durch die Kontrollkamera (45), eines zweidimensionalen Arbeitsbilds (IT) des Kontrollbereichs (65), wobei der Schritt eines Erfassens periodisch während der Bewegung eines ersten Fahrzeugs (20) und eines zweiten Fahrzeugs (25) iteriert wird, durch den Kontrollbereich (65) von dem ersten Bereich (55) zu dem zweiten Bereich (60), wobei ein erstes Nummernschild ein Schild an der Vorderseite des ersten Fahrzeugs (20) und ein zweites Nummernschild ein Schild an der Rückseite des zweiten Fahrzeugs (25) ist,
- Erkennen (265), während dessen die zweite Kamera (40) mindestens ein zweites Bild des zweiten Bereichs (60) aufnimmt, und
- Bestimmen (270) des möglichen Vorhandenseins einer Deichsel (105), die das erste Fahrzeug (20) mit dem zweiten Fahrzeug (25) verbindet, durch Implementieren von mindestens einer Technik, ausgewählt aus:
- einer ersten Technik, umfassend die Schritte eines Vergleichens von jedem Arbeitsbild (IT) mit dem Referenzbild (IR) und eines Bestimmens, ob eine Deichsel (105) vorhanden ist, wenn kein Arbeitsbild (IT) mit dem Referenzbild (IR) identisch ist, und
- einer zweiten Technik, umfassend die Schritte eines Erkennens des ersten Kennzeichens unter Verwendung des ersten Bilds, eines Erkennens des zweiten Kennzeichens unter Verwendung des zweiten Bilds, eines Vergleichens der zwei erkannten Kennzeichen und eines Bestimmens, ob eine Deichsel (105) vorhanden ist, wenn die zwei Kennzeichen nicht identisch sind.

2. Verfahren nach Anspruch 1, wobei, wenn das mögliche Vorhandensein einer Deichsel (105), die das erste Fahrzeug (20) mit dem zweiten Fahrzeug (25) verbindet, bestimmt worden ist, das Verfahren ferner einen Schritt eines Erkennens einer Deichsel (105) durch Verwenden einer Lerntechnik umfasst.

3. Verfahren nach Anspruch 2, wobei das Zeitintervall zwischen der Implementierung des Schritts eines Bestimmens und des Schritts eines Erkennens einer Deichsel (105) größer als oder gleich wie zehn Minuten ist.

4. Verfahren nach Anspruch 1, wobei der Schritt eines Erfassens periodisch mit einer Frequenz von 30 ms oder weniger iteriert wird.

5. Verfahren nach einem der Ansprüche 1 bis 4, wobei die Kontrollkamera (45) eine optische Achse (AO) umfasst und während des Schritts eines Erfassens und des Schritts eines Aufnehmens eine Winkeldifferenz zwischen der optischen Achse (OA) und einer horizontalen Richtung weniger als oder gleich wie 10 Grad ist.

6. Verfahren nach Anspruch 5, wobei mindestens die erste Technik implementiert wird, wobei ein Sichtfeld (75) für die Kontrollkamera (45) definiert ist, das Sichtfeld (75) umfassend einen ersten Teil und einen zweiten Teil, wobei der Kontrollbereich (65) in dem ersten Teil liegt, das Referenzbild (IR) und das Arbeitsbild (IT) jeweils einen ersten Abschnitt (P1) und einen zweiten Abschnitt (P2) umfassen, wobei der erste Abschnitt (P1) ein Bild des ersten Teils und der zweite Abschnitt (P2) ein Bild des zweiten Teils des Sichtfelds (75) ist, eine Fläche des ersten Abschnitts (P1) strikt kleiner als ein Fünftel einer Fläche des zweiten Abschnitts (P2) ist, wobei der Schritt eines Vergleichens ein Vergleichen nur des ersten Abschnitts (P1) des Referenzbilds (IR) mit dem ersten Abschnitt (P1) des Arbeitsbilds (IT) umfasst und der Schritt eines Bestimmens ein Bestimmen einer Deichsel (105) umfasst, wenn der erste Abschnitt (P1) von jedem Arbeitsbild (IT) mit dem ersten Abschnitt (P1) des Referenzbilds (IR) identisch ist.

7. Verfahren nach Anspruch 6, wobei während des Schritts eines Aufnehmens und eines Erfassens eine Fokussierungsentfernung für die Kontrollkamera (45) eingestellt wird, wobei die Fokussierungsentfernung durch den varifokalähnlichen Sensor berechnet wird.

8. Verfahren nach einem der Ansprüche 1 bis 7, wobei mindestens die erste Technik implementiert wird und der Schritt eines Vergleichens das Subtrahieren des Arbeitsbilds (IT) von dem Referenzbild (IR) umfasst.

9. Verfahren nach einem der Ansprüche 1 bis 7, wobei für die Kontrollkamera (45) ein Sichtfeld (75) definiert ist, wobei jeder Punkt des Referenzbilds (IR) und des Arbeitsbilds (IT) mit einem Punkt des Sichtfelds (75) assoziiert ist, wobei die Kontrollkamera (45) eine Gruppe von Detektorelementen umfasst, die jeweils konfiguriert sind, um eine erste elektromagnetische Strahlung zu erfassen, wobei die Kontrollkamera (45) konfiguriert ist, um mit einer vordefinierten Frequenz eine zweite elektromagnetische Strahlung auszusenden, eine Dauer zwischen dem Aussenden der zweiten Strahlung und dem Empfangen der ersten Strahlung durch jedes Detektorelement zu messen und aus den gemessenen Dauern eine Abbildung zu erzeugen, die einen Abstand zwischen der Kontrollkamera (45) und jedem Punkt des Sichtfelds (75) mit jedem entsprechenden Punkt des Referenzbilds (IR) und des Arbeitsbilds (IT) assoziiert.

10. Computerprogrammprodukt, umfassend Softwareanweisungen, die, wenn sie von einem Rechner implementiert werden, das Verfahren nach einem der Ansprüche 1 bis 9 implementieren.

11. Physischer Informationsträger, auf dem ein Computerprogrammprodukt, umfassend Softwareanweisungen, die, wenn sie von einem Rechner implementiert werden, das Verfahren nach einem der Ansprüche 1 bis 9 implementieren, gespeichert ist.

## Claims

1. A method for detecting a drawbar (105) connecting two motor vehicles (20, 25) moving between a first zone (55) and a second zone (60), the first zone (55) being separated from the second zone (60) by a control zone (65) the method being implemented by a system (10) having a single control camera (45) configured to acquire at least one image of the control zone (65), a first camera (35) configured to acquire at least one image of the first zone (55), and a second camera (40) configured to acquire at least one image of the second zone (60), the method comprising the steps of:
- entry (210), during which the first camera (35) acquires at least one first image of the first zone (55).
- acquisition (220), by the control camera (45), of a single reference image (IR) of the control zone (65), no vehicle (20, 25) being present in the control zone (65) during the acquisition step,
- capturing (250), by the control camera (45), a two-dimensional working image (IT) of the control zone (65), the capturing step being iterated periodically during the movement of a first vehicle (20) and a second vehicle (25) through the control zone (65) from the first zone (55) to the second zone (60), a first license plate being a plate at the front of the first vehicle (20) and a second license plate being a plate at the rear of the second vehicle (25),
- recognition (265), during which the second camera (40) acquires at least one first image of the second zone (60), and
- determining (270) whether there is a drawbar (105) connecting the first vehicle (20) to the second vehicle (25) by using at least one technique selected from:
- a first technique comprising the steps of comparing each working image (IT) to the reference image (IR), and determining whether a drawbar (105) is present when no working image (IT) is identical to the reference image (IR), and
- a second technique comprising the steps of recognising the first plate using the first image, recognising the second plate using the second image 25, comparing the two recognised number plates, and determining whether a drawbar (105) is present when the two number plates are not identical.

2. The method according to claim 1, wherein the method further comprises, when the possible presence of a drawbar (105) connecting the first vehicle (20) to the second vehicle (25) has been determined, a step of recognising a drawbar (105) by using a learning technique.

3. The method according to claim 2, wherein the time interval between the implementation of the determination step and the drawbar (105) recognition step is greater than or equal to ten minutes.

4. The method according to claim 1, wherein the capture step is iterated periodically with a frequency less than or equal to 30 ms.

5. The method according to any of the claims 1 to 4, wherein the control camera (45) has an optical axis (AO), and during the capturing step and the acquisition step, an angular difference between the optical axis (AO) and a horizontal direction is 10 degrees or less.

6. The method according to claim 5, wherein at least the first technique is implemented, a field of view (75) being defined for the control camera (45), the field of view comprising a first part and a second part, the control zone (65)being comprised in the first part, the reference image (IR) and the working image (IT) each comprising a first portion (P1) and a second portion (P2), the first portion (P1) being an image of the first part and the second portion (P2) being an image of the second part of the field of view (75), an area of the first portion (P1) being strictly less than one-fifth of an area of the second portion (P2), the comparison step comprising comparing only the first portion (P1) of the reference image (IR) to the first portion (P1) of the working image (IT) and the determining step comprising determining a drawbar (105) when the first portion (P1) of each working image (IT) is identical to the first portion (P1) of the reference image (IR).

7. The method according to claim 6, during the acquisition and capture steps, a focus distance is set for the control camera (45), the focus distance being calculated by the varifocal sensor.

8. The method according to any one of claims 1 to 7, wherein at least the first technique is implemented and the comparison step comprises subtracting the working image (IT) from the reference image (IR).

9. The method according to any one of claims 1 to 7, wherein a field of view (75) is defined for the control camera (45), each point of the reference image (IR) and of the working image (IT) being associated with a point of the field of view (75), the control camera (45) comprising a set of detector elements each configured to detect a first electromagnetic radiation, the control camera (45) being configured to emit with a predefined frequency a second electromagnetic radiation to measure a duration between the emission of the second radiation and the reception of the first radiation by each detector element and to generate, from the measured durations, a map associating a distance between the control camera (45) and each point of the field of view (75) with each corresponding point of the reference image (IR) and of the working image (IT).

10. A computer program product comprising software instructions, which, when carried out by a computer, implement a method according to any one of claims 1 to 9.

11. A physical information medium on which is stored a computer program product comprising software instructions which, when carried out, by a computer, implement a method according to any one of claims 1 to 9.
